# EUROPEAN PATENT APPLICATION

(11) **EP 3 564 767 A1**
(43) Date of publication of application: **06.11.2019**
(21) Application number: 19156684.3
(22) Date of filing: 12.02.2019
(51) Int. Cl.: G05B 19/418

(54) **SUPPORT APPARATUS, SUPPORT PROGRAM AND SETTING METHOD**

(30) Priority: 30.03.2018 JP 2018069452
(71) Applicant: OMRON Corporation, Shiokoji-dori, Shimogyo-Ku Kyoto-shi Kyoto 600-8530 (JP)
(72) Inventor: KUBO, Hiroko, KYOTO, 600-8530 (JP); TAKUMA, Nobuyuki, 600-8530 KYOTO (KR); SUGANUMA, Hiromu, KYOTO, 600-8530 (JP); FUJIMURA, Ryosuke, KYOTO, 600-8530 (JP); MATSUI, Asahi, 600-8530 KYOTO (KR)
(74) Representative: Ter Meer Steinmeister & Partner

(57) **Abstract**

An approach capable easily setting required connection settings even when multiple devices are connected to a network is provided. A support apparatus (400) includes: a first setting reception part (402, 4062), which receives a setting of connection (S6); a second setting reception part (402, 4062), which receives a setting of a variable name used for reference in a program (1062, 1064) executed in a control apparatus (2) for each datum exchanged in the connection that is set (S10); a generation part (402, 4062), which determines a tag name associated with each datum based on the variable name that is set for each datum, and generates a connection setting that contains each tag name that is determined (S14); and a transmission part (402, 4062), which transmits the connection setting that is generated to the control apparatus (2) and the device which are involved in the connection setting (S16).

## Description

### BACKGROUND OF THE INVENTION

### Technical Field

The present invention relates to a support apparatus, a support program, and a setting method.

### Related Art

Conventionally, in the field of FA (factory automation), a system in which a control apparatus and various devices such as a sensor, an actuator or the like are connected via a network is used. With the development of the ICT (Information and Communication Technology), application of more advanced communication technology is progressing.

For example, a network technology, which is managed and provided by the ODVA, Inc. whose headquarters are located in the U.S. and referred to as the CIP (Common Industrial Protocol), can be employed to implement communication between control apparatuses and between a control apparatus and any other device (see non-patent literature 1).

### [Literature of related art] [Patent literature]

[Non-patent literature 1] ODVA, "The Common Industrial Protocol", [online], [searched on March 15, 2018], Internet <URL: https://www.odva.org/ Technology-Standards/Common-Industrial-Protocol-CIP/Overview>

### SUMMARY

### [Problems to be solved]

In order to implement the communication which uses the aforementioned advanced communication technology, the control apparatus and/or the devices which are communication targets should be appropriately set respectively. On the other hand, multiple devices may be connected to the network, and there is a problem that the setting operation is complicated and time-consuming.

The present invention aims at solving the aforementioned problem and provides an approach by which required connection setting can be easily set even when multiple devices are connected to the network.

### [Means to Solve Problems]

According to an example of this disclosure, a support apparatus that is directed to a control apparatus network-connected to one or a plurality of remote devices is provided. The support apparatus includes: a first setting reception part, which receives a setting of connection established between the control apparatus and any remote device; a second setting reception part, which receives a setting of a variable name used for reference in a program executed in the control apparatus for each datum exchanged in the connection that is set; a generation part, which determines a tag name associated with each datum based on the variable name that is set for each datum, and generates a connection setting that contains each tag name that is determined; and a transmission part, which transmits the connection setting that is generated to the control apparatus and the device which are involved in the connection setting.

According to this disclosure, when a user sets the variable name used in the reference in the program executed in the control apparatus for each datum exchanged between the control apparatus and the remote device, the tag name is automatically generated and the required connection setting is generated. By employing this function in which the tag name is automatically generated in conjunction with the setting of the variable name, the connection setting can be easily performed even by a user lacking expertise.

In the aforementioned disclosure, the support apparatus may further include a third setting reception part which receives a setting of variable names used for reference in the program executed in the control apparatus for input-output data managed by a local device. According to this disclosure, the variable names for the reference in the program executed in the control apparatus can be set even for the input-output data managed by the local device.

In the aforementioned disclosure, the reception of setting by the second setting reception part and the reception of setting by the third setting reception part may be performed on the same screen. According to this disclosure, the user can set the variable names without realizing distinction between the input-output data exchanged with the remote device and the input-output data managed by the local device.

In the aforementioned disclosure, items that are set may be in common between the setting by the second setting reception part and the setting by the third setting reception part. According to this disclosure, the setting of variable names for the input-output data exchanged with the remote device and the setting of variable names for the input-output data managed by the local device can be performed on the same screen, and thus operability can be improved.

In the aforementioned disclosure, the items that are set may include a setting of data classification. According to this disclosure, designation of the data classification required for the connection setting can be achieved.

In the aforementioned disclosure, the items that are set may include a setting of data attribute of the variables. According to this disclosure, designation of the data attribute of the variables required for the connection setting can be achieved.

According to another example of this disclosure, a support program that is executed in a computer capable of communicating with a control apparatus network-connected with one or a plurality of remote devices is provided. The support program makes the computer execute: a step to receive a setting of connection established between a control apparatus and any remote device; a step to receive a setting of a variable name used for reference in a program executed in the control apparatus for each datum exchanged in the connection that is set; a step to determine a tag name associated with each datum based on the variable name that is set for each datum and to generate a connection setting that contains each tag name that is determined; and a step to transmit the connection setting that is generated to the control apparatus and the device which are involved in the connection setting.

According to still another example of this disclosure, a setting method for a control system which includes a control apparatus and one or a plurality of remote devices network-connected to the control apparatus is provided. The setting method includes: a step to receive a setting of connection established between a control apparatus and any remote device; a step to receive a setting of a variable name used for reference in a program executed in the control apparatus for each datum exchanged in the connection that is set; a step to determine a tag name associated with each datum based on the variable name that is set for each datum and to generate a connection setting that contains each tag name that is determined; and a step to transmit the connection setting that is generated to the control apparatus and the device which are involved in the connection setting.

### [Effect]

According to the present invention, the required connection setting can be easily set even when multiple devices are connected to the network.

### BRIEF DESCRIPTION OF THE DRAWINGS

FIG. 1 is a schematic diagram showing a functional configuration example of a safety control system of an embodiment.
FIG. 2 is a schematic diagram showing a configuration example of the safety control system of this embodiment.
FIG. 3 is a schematic diagram showing a hardware configuration example of a standard control unit constituting a control apparatus of this embodiment.
FIG. 4 is a schematic diagram showing a hardware configuration example of a safety control unit constituting the control apparatus of this embodiment.
FIG. 5 is a schematic diagram showing a hardware configuration example of a local IO unit constituting the control apparatus of this embodiment.
FIG. 6 is a schematic diagram showing a hardware configuration example of a remote device constituting the control apparatus of this embodiment.
FIG. 7 is a schematic diagram showing a hardware configuration example of a support apparatus constituting the control apparatus of this embodiment.
FIG. 8 is a schematic diagram for describing a communication method of the safety control system of this embodiment.
FIG. 9A and FIG. 9B are schematic diagrams showing an example of an IO assembly in the remote device of the safety control system of this embodiment.
FIG. 10 is a schematic diagram showing an example of an IO assembly in the control apparatus (safety control unit) of the safety control system of this embodiment.
FIG. 11 is a flowchart showing a procedure example of a setting and user program creation in the safety control system of this embodiment.
FIG. 12 is a schematic diagram showing an example of a user interface screen related to designation of system configuration (step S2) shown in FIG. 11.
FIG. 13 is a schematic diagram showing an example of the user interface screen related to a setting of data size and classification of the IO assembly (step S4) shown in FIG. 11.
FIG. 14 is a schematic diagram showing an example of the user interface screen related to a setting of connection (step S6) shown in FIG. 11.
FIG. 15 is a schematic diagram showing an example of the user interface screen related to the setting of connection (step S6) shown in FIG. 11.
FIG. 16 is a schematic diagram showing an example of the user interface screen related to correspondence between the IO assembly contained in the connection that is set and internal variables (step S8) shown in FIG. 11.
FIG. 17 is a schematic diagram showing an example of the user interface screen related to correspondence between the IO assembly contained in the connection that is set and internal variables (step S8) shown in FIG. 11.
FIG. 18 is a schematic diagram showing an example of the user interface screen related to creation of an arbitrary user program (step S12) shown in FIG. 11.
FIG. 19 is a schematic diagram showing an example of an IO assembly setting table referred to by the support apparatus of the safety control system of this embodiment.

### DESCRIPTION OF THE EMBODIMENTS

Embodiments of the present invention are described in detail with reference to the drawings. Moreover, identical or correspondent parts in the drawings are denoted by identical symbols and the description is not repeated.

### <A. Application example>

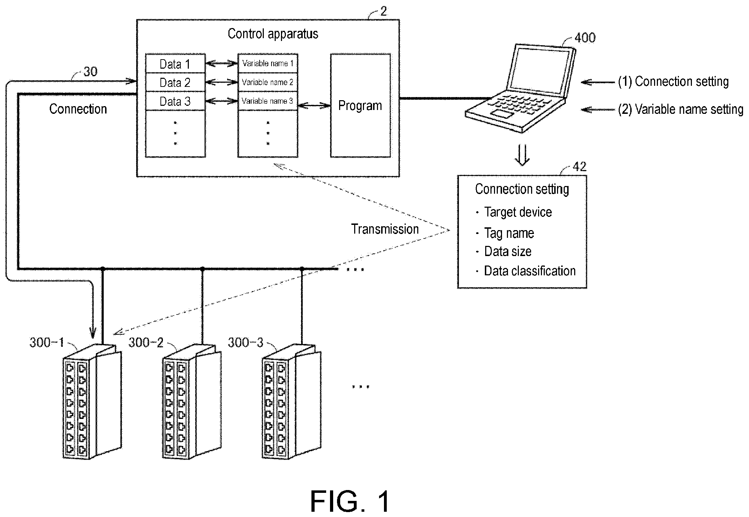

First, an example of a case in which the present invention is applied is described. FIG. 1 is a schematic diagram showing a functional configuration example of a safety control system 1 of this embodiment. The safety control system 1 of this embodiment provides, for example, an architecture for achieving function safety stipulated in IEC 61508 and the like.

Typically, the safety control system 1 includes a control apparatus 2 achieving safety control of the function safety, and one or a plurality of remote devices 300-1, 300-2, 300-3... (also generally referred to as "the remote device 300" hereinafter) network-connected with the control apparatus 2.

In this specification, the "device" includes apparatuses capable of being connected to another apparatus (typically, the control apparatus) via an arbitrary local bus or an arbitrary network. The device includes at least a portion of a single sensor, a single actuator, a relay apparatus for connecting one or a plurality of sensors or actuators to the network, and various control apparatus such as a robot controller, a temperature controller, a flow amount controller and so on.

In particular, from the perspective of the control apparatus that implements arbitrary standard control or safety control, the device connected via an arbitrary local bus is referred to as "a local device" or "a local unit", and the device connected via an arbitrary network is referred to as "a remote device".

In this specification, typically, the "standard control" is a general term of treatments for controlling a control target according to a predetermined requirement specification. Besides, in this specification, the "safety control" is a general term of treatments for preventing the safety of a person from being threatened by any malfunction, any equipment or machine or the like. The safety control includes, for example, a treatment in which the control target is stopped not only in a case that behavior of the control target itself is different from original behavior but also in a case that any abnormality occurs in the control apparatus 2 itself.

In the safety control system 1, the control apparatus 2 is network-connected to one or a plurality of remote devices 300. The safety control system 1 further includes a support apparatus 400 which is a computer capable of communicating with the control apparatus 2. The support apparatus 400 is an apparatus directed to the control apparatus 2 and various settings can be performed on the control apparatus 2 and one or a plurality of remote devices 300 network-connected to the control apparatus 2.

In the safety control system 1, in order that the control apparatus 2 exchanges data with an arbitrary remote device 300, a connection is required to be established between the control apparatus 2 and the target remote device 300. In FIG. 1, a state in which a connection 30 is established between the control apparatus 2 and the remote device 300-1 is shown as an example.

In order to establish the connection 30, a connection setting 42 is applied to the control apparatus 2 and the remote device 300-1 in advance. The connection setting 42 includes designation of the control apparatus 2 and the remote device 300 which are involved in the connection and settings (tag name, data size, data classification) related to input-output data exchanged between the target control apparatus 2 and remote device 300.

The connection setting 42 required for the establishment of the connection is applied by the support apparatus 400.

More specifically, the support apparatus 400 has a setting reception function which receives the setting of the connection established between the control apparatus 2 and any remote device 300. In addition, the support apparatus 400 has a setting reception function which receives the setting of a variable name used for reference in a program executed in the control apparatus 2 for each datum exchanged in the connection that is set.

On receiving these settings, the support apparatus 400 determines a tag name associated with each datum based on the variable name that is set for each datum and generates the connection setting 42 which contains each tag name that is determined. Then, the support apparatus 400 transmits the connection setting 42 that is generated to the control apparatus 2 and the device 300 which are involved in the connection setting 42.

By employing the aforementioned setting reception function, generation function, and transmission function, when a user designates the connection between the control apparatus 2 and any remote device 300 and the variable names, the setting required for the establishment of the connection is automatically performed without realizing the tag names. As a result, the connection setting between the control apparatus 2 and one or a plurality of remote devices 300 can be easily performed even by the user lacking expertise.

### <B. Configuration example of safety control system 1>

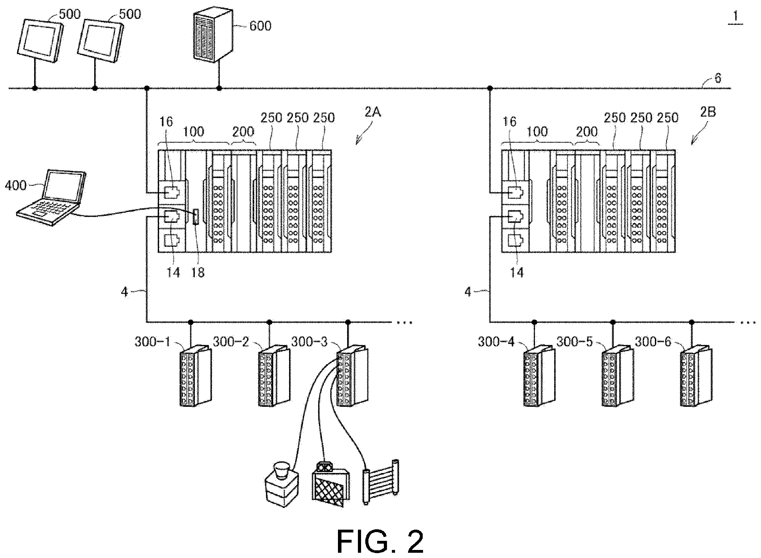

A configuration example of the safety control system 1 is described. FIG. 2 is a schematic diagram showing a configuration example of the safety control system 1 of this embodiment.

In FIG. 2, the safety control system 1 including two control apparatuses 2A, 2B (also generally referred to as "the control apparatus 2" hereinafter) is shown as an example.

The control apparatus 2 is capable of standard control and safety control for controlling the control target that is not shown.

Although the standard control and the safety control may be achieved by the same unit, the control apparatus 2 is constituted of a standard control unit 100 that is mainly responsible for the control to the control target, and a safety control unit 200 that is mainly responsible for the safety control. As described later, by executing a standard control program in the standard control unit 100, the standard control is achieved, and by executing a safety program in the safety control unit 200, the safety control is achieved. One or a plurality of local IO units 250 may be mounted on the control apparatus 2.

The local IO unit 250 is responsible for input of signals from safety components and/or output of signals to the safety components. In this specification, the "safety component" mainly includes arbitrary apparatuses used in the safety control, for example, including a safety relay, all types of safety sensors and the like.

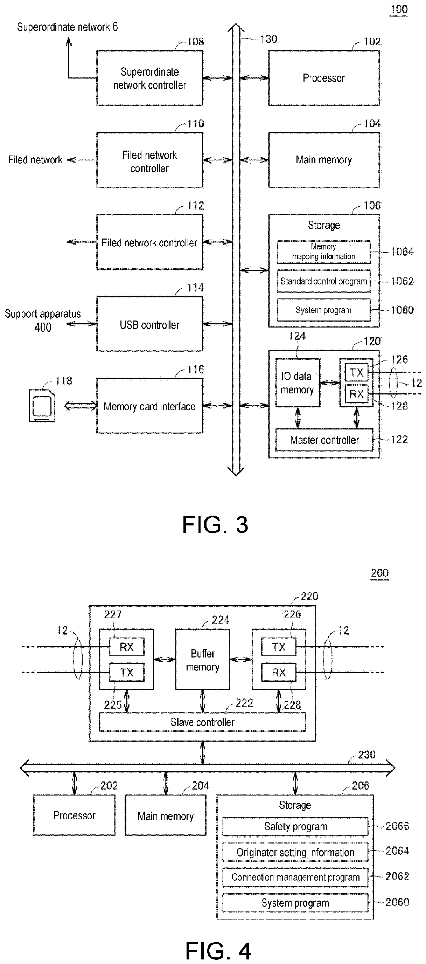

The standard control unit 100 is communicably connected to the safety control unit 200 and the local IO unit 250 via a local bus 12 (see FIG. 3, FIG. 4). In the control apparatus 2 shown in FIG. 2, in the standard control unit 100, communication ports 14, 16 for the connection with another control apparatus 2 or device are arranged, and the safety control unit 200 uses the standard control unit 100 that is connected via the local bus 12 to exchange data with another control apparatus 2 or device.

The standard control unit 100 includes the communication port 14 for physical connection with a field network 4, and the communication port 16 for physical connection with a superordinate network 6. As an example, one or a plurality of remote devices 300-1, 300-2, 300-3, 300-4, 300-5, 300-6... is connected to the field network 4, and one or a plurality of HMIs (Human Machine Interface) 500 and a server apparatus 600 are connected to the superordinate network 6. In addition, a control apparatus 2A and a control apparatus 2B are also connected via the superordinate network 6.

The HMI 500 displays state values and the like kept by the control apparatus 2 and receives user operation to output content of the user operation that is received to the control apparatus 2.

The server apparatus 600 contains a database that collects information from the control apparatus 2 or an operation management system and the like which give various settings such as a recipe to the control apparatus 2.

In FIG. 2, a safety IO device is shown as an example of the remote device 300. The safety IO device is one type of relay apparatus for forming a network for signals exchanged with one or a plurality of safety components (for example, an emergency stop button, a safety switch, light curtain and the like), which sends out detection signals and the like output from the safety component to the network and outputs instructions transmitted via the network to the target safety component. Moreover, the remote device is not limited to the safety IO device shown in FIG. 2, and any apparatus for achieving function safety can be used.

A protocol related to the data transmission of the field network 4 and the superordinate network 6 may be an industrial network protocol such as EtherNet/IP, DeviceNet, CompoNet, ControlNet and the like. As described later, a user program (application) executed in the standard control unit 100 and/or the safety control unit 200 employs such protocols related to the data transmission to achieve a data exchange in accordance with a communication protocol such as CIP (Common Industrial Protocol), CIP Safety or the like.

That is, the control apparatus 2 may employ an architecture in which the industrial network protocol such as EtherNet/IP, DeviceNet, CompoNet, ControlNet or the like is combined with the communication protocol (function at application level) such as CIP, CIP Safety or the like.

The description below mainly illustrates the architecture in which the CIP Safety is employed in addition to EtherNet/IP between the safety control unit 200 and one or a plurality of remote devices 300. Moreover, the CIP Safety is the communication protocol based on CIP and corresponding to function safety specifications such as IEC 61508 and the like.

The support apparatus 400 is communicable with the control apparatus 2 via a communication port 18. That is, the support apparatus 400 is configured to be capable of communicating with the control apparatus 2 that is network-connected to one or a plurality of remote devices 300. The support apparatus 400 provides the user with functions such as development, debugging or the like of the user program executed in the control apparatus 2 (the standard control unit 100 and/or the safety control unit 200), and provides the user with the function of performing network setting and the like to the remote device 300 which is connected via the field network 4. The setting function provided by the support apparatus 400 is described later in detail.

### <C. Hardware configuration example>

Next, hardware configuration examples of main apparatuses constituting the safety control system 1 of this embodiment are described.

### (c1: Standard control unit 100)

FIG. 3 is a schematic diagram showing a hardware configuration example of the standard control unit 100 constituting the control apparatus 2 of this embodiment. Referring to FIG. 3, the standard control unit 100 includes a processor 102, a main memory 104, a storage 106, a superordinate network controller 108, field network controllers 110, 112, a USB (Universal Serial Bus) controller 114, a memory card interface 116, and a local bus controller 120. These components are connected via a processor bus 130.

The processor 102 corresponds to an operation processing part that implements a control operation and the like and is formed of a CPU (Central Processing Unit), a GPU (Graphics Processing Unit) or the like. Specifically, the processor 102 reads out programs (for example, a system program 1060 and a standard control program 1062) stored in the storage 106 and develops the programs in the main memory 104 for execution, thereby achieving the control corresponding to the control target and various processing as described later.

The main memory 104 is formed of a volatile memory apparatus and the like such as a DRAM (Dynamic Random Access Memory), a SRAM (Static Random Access Memory) and the like. The storage 106 is formed of a non-volatile memory apparatus and the like, for example, a HDD (Hard Disk Drive), a SSD (Solid State Drive) and the like.

In the storage 106, in addition to the system program 1060 for achieving the basic function, the standard control program 1062 which is created corresponding to the control target such as equipment or a machine is stored. Furthermore, in the storage 106, memory mapping information 1064 for relaying the data transmission which is done by the safety control unit 200 and employs the superordinate network controller 108 and/or the field network controllers 110, 112 is stored.

The superordinate network controller 108 exchanges data with an arbitrary information processing apparatus such as another control apparatus 2, the HMI 500, the server apparatus 600 or the like via the superordinate network 6.

The field network controllers 110, 112 exchanges data with the device and/or the remote device 300 via the field network 4. In FIG. 3, two field network controllers 110, 112 are shown, but it may also be that only one field network controller is employed.

The USB controller 114 exchanges data with the support apparatus 400 and the like via a USB connection.

The memory card interface 116 receives a memory card 118 which is an example of detachable recording medium. The memory card interface 116 is capable of writing data into the memory card 118 and reading various data (log, trace data and so on) out from the memory card 118.

The local bus controller 120 exchanges data with the safety control unit 200 or the local IO unit 250 via the local bus 12. More specifically, the local bus controller 120 includes a master controller 122, an IO data memory 124, a transmission circuit (TX) 126, and a reception circuit (RX) 128.

The IO data memory 124 is the memory which temporarily keeps data (input data and output data) exchanged with various units via the local bus 12, and an address corresponding to each unit is specified in advance. The transmission circuit 126 generates a communication frame that includes the output data and sends out the communication frame to the local bus 12. The reception circuit 128 receives the communication frame transmitted through the local bus 12 and demodulates the communication frame into the input data. The master controller 122 controls the IO data memory 124, the transmission circuit 126, and the reception circuit 128 according to data transmission timing and the like on the local bus 12. The master controller 122 provides the control as a communication master that manages the data transmission and the like on the local bus 12.

In FIG. 3, the configuration example in which the necessary functions are provided by the processor 102 executing the programs is shown, but dedicated hardware circuit (for example, ASIC (Application Specific Integrated Circuit), FPGA (Field-Programmable Gate Array) or the like) may be used to implement part or all of the functions that are provided. Elsewise, hardware in accordance with a general-purpose architecture (for example, an industrial PC based on a general-purpose PC) may be used to implement main parts of the standard control unit 100. In this case, a virtualization technology may be used to execute a plurality of OSs (Operating System) with different purposes in parallel and execute necessary application in each OS. Furthermore, the configuration in which the functions of a display apparatus, a support apparatus or the like are integrated into the standard control unit 100 may be employed.

### (c2: Safety control unit 200)

FIG. 4 is a schematic diagram showing a hardware configuration example of the safety control unit 200 constituting the control apparatus 2 of this embodiment. Referring to FIG. 4, the safety control unit 200 includes a processor 202, a main memory 204, a storage 206, and a local bus controller 220. These components are connected via a processor bus 230.

The local bus controller 220 functions as a communication slave and provides a communication interface the same as other units. That is, the local bus controller 220 exchanges data with the standard control unit 100 and the function units via the local bus 12.

On the local bus 12, the safety control unit 200 and the local IO unit 250 are daisy-chain connected. That is, on receiving the communication frame from an apparatus existing on the upper-stream side on the local bus 12, the local bus controller 220 copies inside all or part of the data of the communication frame and delivers the data to an apparatus existing on the lower-stream side. Similarly, on receiving the communication frame from the apparatus existing on the lower-stream side on the local bus 12, the local bus controller 220 copies inside all or part of the data of the communication frame and delivers the data to the apparatus existing on the upper-stream side. The data transmission between the standard control unit 100 and the function units and the safety control unit 200 is achieved by this sequential delivery of the communication frame.

More specifically, the local bus controller 220 includes a slave controller 222, a buffer memory 224, transmission circuits (TX) 225, 226, and reception circuits (RX) 227, 228.

The buffer memory 224 temporarily keeps the communication frame transmitted through the local bus 12.

On receiving the communication frame transmitted through the local bus 12, the reception circuit 227 stores all or part of the communication frame in the buffer memory 224. The transmission circuit 226 sends out the communication frame received by the reception circuit 227 to the local bus 12 on the lower-stream side.

Similarly, on receiving the communication frame transmitted through the local bus 12, the reception circuit 228 stores all or part of the communication frame in the buffer memory 224. The transmission circuit 225 sends out the communication frame received by the reception circuit 228 to the local bus 12 on the lower-stream side.

The slave controller 222 controls the transmission circuits 225, 226, the reception circuits 227, 228, and the buffer memory 224 to achieve the sequential delivery of the communication frame on the local bus 12.

The processor 202 corresponds to an operation processing part that implements a control operation and the like and is formed of a CPU, a GPU or the like. Specifically, the processor 202 reads out programs (for example, a system program 2060, a connection management program 2062, and a safety program 2066) stored in the storage 206 and develops the programs in the main memory 204 for execution, thereby achieving the control corresponding to the control target and various processings as described later.

The main memory 204 is formed of a volatile memory apparatus and the like such as a DRAM, a SRAM and the like. The storage 206 is formed of a non-volatile memory apparatus and the like, for example, a HDD, a SSD and the like.

In the storage 206, in addition to the system program 2060 for achieving the basic function, the connection management program 2062 for establishing and maintaining the connection used to exchange data with the remote device 300, originator setting information 2064 that contains setting information required for the data exchange with the remote device 300, and the safety program 2066 which is created corresponding to the target remote device 300 are stored.

In FIG. 4, the configuration example in which the necessary functions are provided by the processor 202 executing the programs is shown, but dedicated hardware circuit (for example, ASIC, FPGA or the like) may be used to implement part or all of the functions that are provided. Elsewise, hardware in accordance with a general-purpose architecture (for example, an industrial PC based on a general-purpose PC) may be used to implement main parts of the safety control unit 200.

### (c3: Local IO unit 250)

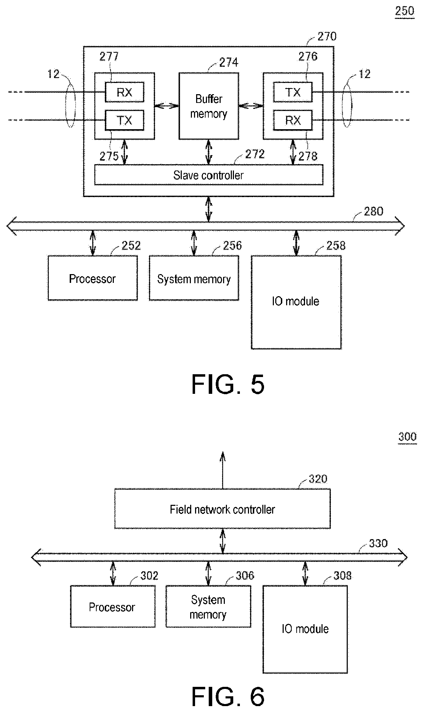

FIG. 5 is a schematic diagram showing a hardware configuration example of the local IO unit 250 constituting the control apparatus 2 of this embodiment. Referring to FIG. 5, the local IO unit 250 includes a processor 252, a system memory 256, an IO module 258, and a local bus controller 270. These components are connected via a processor bus 280.

The local bus controller 270 functions as a communication slave and provides a communication interface the same as other units. The local bus controller 270 includes a slave controller 272, a buffer memory 254, transmission circuits (TX) 275, 276, and reception circuits (RX) 277, 278. The basic configuration of the local bus controller 270 is similar to the local bus controller 220 shown in FIG. 4, and thus detailed description is not repeated.

The processor 252 corresponds to an operation processing part that implements various processings in the local IO unit 250. The system memory 256 is formed of a flash memory, a NVRAM (non-volatile RAM) or the like and stores various settings or firmware required for the processings in the local IO unit 250.

The IO module 258 performs, corresponding to the function of the local IO unit 250, an input processing on signals from the field and/or an output processing on signals to the field. The IO module 258 is formed of, for example, a photo-coupler, a micro relay, an AD (Analog to Digital) convertor, a DA (Digital to Analog) convertor and the like. Furthermore, when the local IO unit 250 is a device that provides function safety, the functions such as disconnection detection, feedback detection or the like are also implemented.

In FIG. 5, the configuration example is shown in which the processor 252 is used and necessary functions are provided, but dedicated hardware circuits (for example, ASIC, FPGA or the like) may be used to implement part or all of the functions that are provided.

### (c4: Remote device 300)

FIG. 6 is a schematic diagram showing a hardware configuration example of the remote device 300 constituting the control apparatus 2 of this embodiment. Referring to FIG. 6, the remote device 300 includes a processor 302, a system memory 306, an IO module 308, and a field network controller 320. These components are connected via a processor bus 330.

The field network controller 320 functions as a communication slave and provides a communication interface for performing communication with the control apparatus 2. The basic configuration of the field network controller 320 is similar to the field network controllers 110, 112 shown in FIG. 3, and thus detailed description is not repeated.

The processor 302 corresponds to an operation processing part that implements various processings in the remote device 300. The system memory 306 is formed of a flash memory, a NVRAM or the like and stores various settings or firmware required for the processings in the remote device 300.

The IO module 308 performs, corresponding to the function of the remote device 300, the input processing on the signals from the field and/or the output processing on the signals to the field. The basic configuration of the IO module 308 is similar to the IO module 258 shown in FIG. 5, and thus detailed description is not repeated.

In FIG. 6, the configuration example is shown in which the processor 302 is used and necessary functions are provided, but dedicated hardware circuits (for example, ASIC, FPGA or the like) may be used to implement part or all of the functions that are provided.

### (c5: Support apparatus 400)

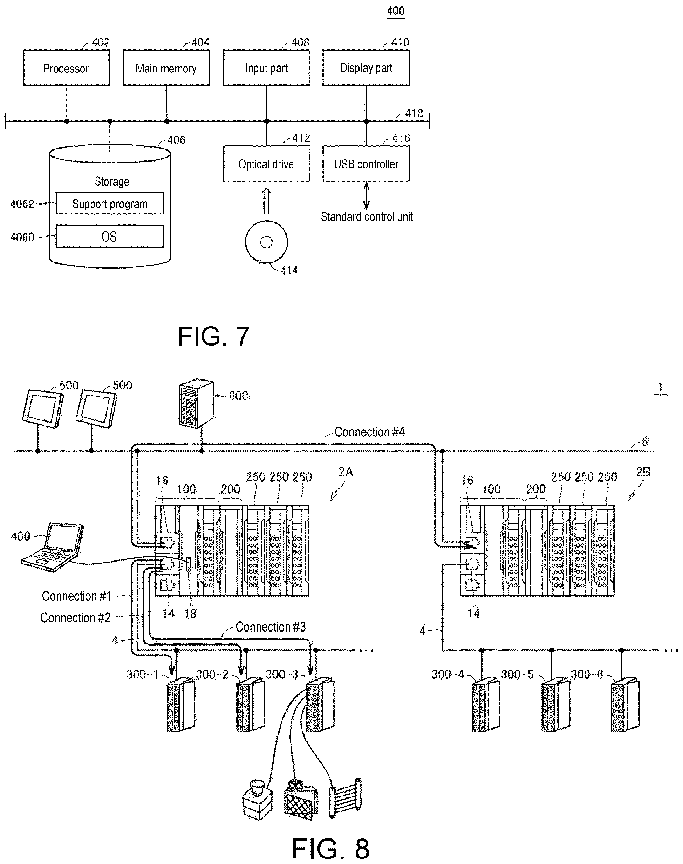

FIG. 7 is a schematic diagram showing a hardware configuration example of the support apparatus 400 connected to the control apparatus 2 of this embodiment. As an example, the support apparatus 400 is achieved by using hardware in accordance with a general-purpose architecture (for example, a general-purpose PC) to execute the programs.

Referring to FIG. 7, the support apparatus 400 includes a processor 402, a main memory 404, a storage 406, an input part 408, a display part 410, an optical drive 412, and a USB controller 416. These components are connected via a processor bus 418.

The processor 402 is formed of a CPU and the like, reads out the programs (for example, an OS 4060 and a support program 4062) stored in the storage 406 and develops the programs in the main memory 404 for execution, thereby implementing various processings described later.

The main memory 404 is formed of a volatile memory apparatus or the like such as a DRAM, a SRAM or the like. The storage 406 is formed of, for example, a non-volatile memory apparatus or the like such as a HDD, a SSD or the like.

In the storage 406, in addition to the OS 4060 for achieving the basic functions, the support program 4062 for providing the function as the support apparatus 400 is stored.

The input part 408 is formed of a keyboard, a mouse or the like and receives user operations. The display part 410 is formed of a display, various indicators, a printer and so on and outputs processing results and the like from the processor 402.

The USB controller 416 controls, via USB connection, the data exchange with the standard control unit 100 and the like of the control apparatus 2.

The support apparatus 400 has an optical drive 412, and from a recording medium 414 (for example, an optical recording medium such as a DVD (Digital Versatile Disc) or the like) which stores computer-readable programs in a non-transitory manner, the programs stored therein are read out to be installed in the storage 406 and the like.

The support program 4062 and the like executed in the support apparatus 400 may be installed via the computer-readable recording medium 414, or be installed in a form downloaded from the server apparatus and the like on the network. Besides, the functions provided by the support apparatus 400 of this embodiment may also be achieved in a form employing part of the module provided by the OS.

In FIG. 7, the configuration example is shown in which necessary functions as the support apparatus 400 are provided by the processor 402 executing the programs, but dedicated hardware circuits (for example, ASIC, FPGA or the like) may be used to implement part or all of the functions that are provided.

### (c6: Others)

The HMI 500 may employ a hardware configuration mounted as a dedicated machine or employ a hardware configuration in accordance with a general-purpose architecture (for example, an industrial PC based on a general-purpose PC). When the HMI 500 is implemented by the industrial PC based on a general-purpose PC, the hardware configuration similar to the support apparatus 400 as shown in the aforementioned FIG. 7 is employed. However, an application program for achieving HMI processing is installed instead of the support program 4062 in the configuration example shown in FIG. 7.

As an example, the server apparatus 600 can be achieved using a general-purpose file server or database server. The hardware configuration of such an apparatus is publicly known, and thus more detailed description is not performed.

### <D. Communication method of the safety control system 1>

Next, the communication method of the safety control system 1 is schematically described.

FIG. 8 is a schematic diagram for describing the communication method of the safety control system 1 of this embodiment. Referring to FIG. 8, in the safety control system 1 of this embodiment, both the communication between the control apparatus 2 and the remote device 300 and the communication between control apparatuses 2 employ one kind of message transmission.

In FIG. 8, an example is shown in which a connection #1 is established between the control apparatus 2A and the remote device 300-1, a connection #2 is established between the control apparatus 2A and the remote device 300-2, a connection #3 is established between the control apparatus 2A and the remote device 300-3, and a connection #4 is established between the control apparatus 2A and the control apparatus 2B.

In the description below, the side which functions as a communication master is also referred to as an "originator" and the side which functions as a communication slave is also referred to as a "target".

A data size of the data exchanged in each connection (also referred to as "data set" hereinafter) is set for the originator and the target in advance. For example, input-output data up to the predetermined data size can be allocated to one data set (that is, each connection).

In the communication of this embodiment, the input-output data is allocated to each data set at a predetermined data unit (also referred to as "the IO assembly" hereinafter). The IO assembly means variables or objects accessible from outside. Tag names are set in advance as identification information for specifying each datum. The tag name can also be regarded as a name of the object indicating each datum. Corresponding data can be specified by designating the tag names.

The IO assembly may include an input assembly indicating data (input data) which is generated or collected in the target and given to the originator, and an output assembly indicating data (output data) which is generated or collected in the originator and given to the target. Furthermore, the IO assembly may include a safety input assembly consisting of input data related to function safety and a safety output assembly consisting of output data related to function safety. In the description below, unless otherwise described, the term of "the IO assembly" is used in the meaning of including at least any one of the input assembly, the output assembly, the safety input assembly, and the safety output assembly.

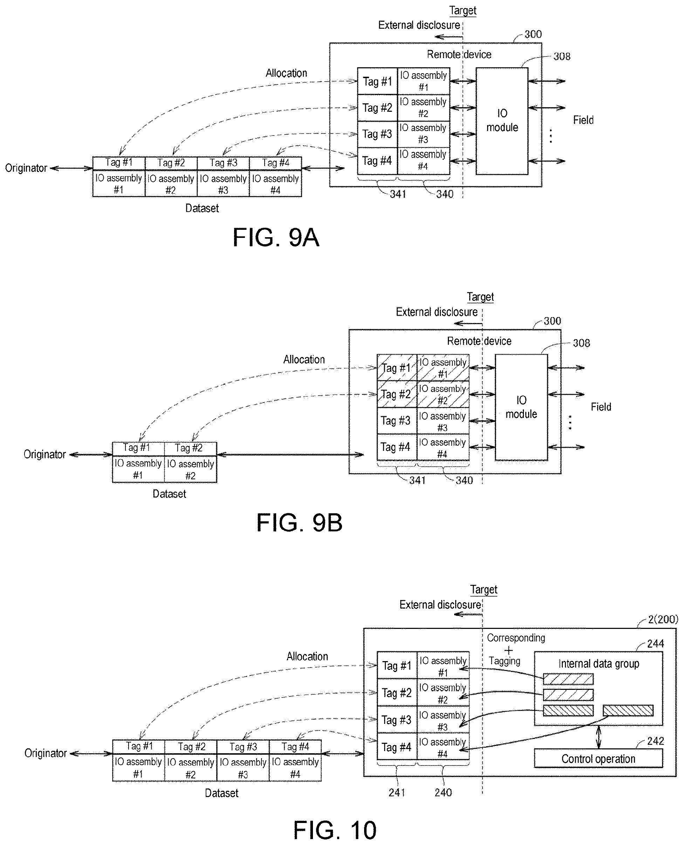

FIG. 9A and FIG. 9B are schematic diagrams showing an example of the IO assembly in the remote device 300 of the safety control system 1 of this embodiment. FIG. 10 is a schematic diagram showing an example of the IO assembly in the control apparatus 2 (the safety control unit 200) of the safety control system 1 of this embodiment.

Referring to FIG. 9A and FIG. 9B, in the remote device 300, IO assemblies 340 of a predetermined data size or number is prepared depending on the function and the like of the remote device 300. Typically, the data size or number of the IO assemblies 340 is predetermined corresponding to the function or the number of input-output points of the IO module 308 mounted in the remote device 300. When the remote device 300 functions as the target, the IO assemblies 340 prepared in the remote device 300 is accessible from the control apparatus 2 (the safety control unit 200) which functions as the originator.

In the example shown in FIG. 9A and FIG. 9B, four IO assemblies 340 (the IO assemblies #1-#4) are prepared in the remote device 300. Tag names 341 are set in advance for each of the four IO assemblies 340.

In the setting example shown in FIG. 9A, all of the four IO assemblies 340 (the IO assemblies #1-#4) are allocated to the data set. In the setting example shown in FIG. 9B, two of the four IO assemblies 340 (the IO assemblies #1 and #2) are allocated to the data set.

As described later, the allocation of the IO assemblies 340 allocated to the data set among the IO assemblies 340 is set for each remote device 300 by the support apparatus 400.

As shown in FIG. 9A and FIG. 9B, the data size (number) of the IO assemblies 340 stored in the data set can be changed optionally in a predetermined limitation range.

In addition to the remote device 300, the control apparatus 2 may functions as the target. The example shown in FIG. 8 corresponds to a case in which the control apparatus 2A becomes the originator and the control apparatus 2B becomes the target (the connection #4). Because the remote device 300 is predetermined to provide specific functions, basically, the data size (number) and classification (for example, distinction between input-output purpose, input purpose, and output purpose) of the IO assemblies 340 are predetermined. In contrast, in the control apparatus 2, a plurality of input-output data and internal variables can be employed, and it is impossible to disclose all these data as the IO assemblies. Therefore, the data to be disclosed as the IO assemblies is also set corresponding to the application.

Referring to FIG. 10, in the control apparatus 2 (the safety control unit 200), the processor 202 executes the system program 2060 and the safety program 2066 (FIG. 4), and thereby a control operation 242 is implemented. Along with the implementation of the control operation 242, values of internal data groups 244 are also updated sequentially.

Predetermined data in the internal data groups 244 is allocated to IO assemblies 240. In the example shown in FIG. 10, the specific data contained in the internal data groups 244 are allocated as four IO assemblies 240 (the IO assemblies #1-#4). Tag names 241 are set in advance for each of the four IO assemblies 240.

In the four IO assemblies 240, one or a plurality of pre-designated IO assemblies 240 are allocated to the data set. That is, as shown in the aforementioned FIG. 9A, all of the four IO assemblies 240 may be allocated to one data set, or only part of the four IO assemblies 240 is allocated to one data set.

The correspondence of the internal data group 244 to the IO assemblies 240 in the control apparatus 2 and selection of the IO assemblies 240 allocated to the data set in the control apparatus 2 are implemented by the support apparatus 400.

### <E. Procedures of setting and user program creation>

Next, an example of the setting for implementing the aforementioned communication between the control apparatus 2 and the remote device 300 and the communication between the control apparatuses 2 as well as procedures to create the user program is described.

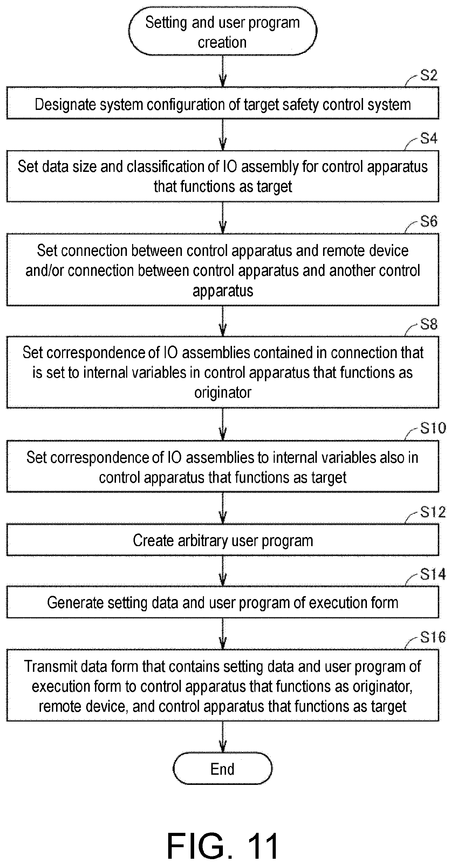

FIG. 11 is a flowchart showing a procedure example of the setting and user program creation in the safety control system 1 of this embodiment. Each step shown in FIG. 11 is basically implemented by the processor 402 of the support apparatus 400 executing the support program 4062.

Referring to FIG. 11, first, the user designates a system configuration of the target safety control system 1 (step S2).

Then, the user sets the data size and the classification of the IO assembly for the control apparatus 2 (the safety control unit 200) that functions as the target (step S4). The processing shown in step S4 corresponds to the operation of designating the data disclosed from the control apparatus 2 that functions as the target. Therefore, the processing of step S4 can be skipped when the control apparatus 2 that functions as the target does not exist (or there is no data required to be disclosed).

After that, the user sets the connection between the control apparatus 2 and the remote device 300 and/or the connection between the control apparatus 2 and another control apparatus 2 (step S6). That is, the support apparatus 400 receives the connection setting which is the setting of the connection established between the control apparatus 2 and each remote device 300 (corresponding to the setting reception function).

Furthermore, the user sets the correspondence of the IO assemblies contained in the connection that is set to the internal variables in the control apparatus 2 that functions as the originator (step S8). That is, the support apparatus 400 receives the setting of the variable names used for reference in the program executed in the control apparatus 2 for each datum exchanged in the connection that is set (corresponding to the setting reception function). At this time, the correspondence of the input-output data managed by the local IO unit 250 which is an example of the local device to the internal variables may also be set in parallel.

Besides, when the control apparatus 2 that functions as the target exists, the correspondence of the IO assemblies to the internal variables is also set in the control apparatus 2 that functions as the target (step S10).

When the aforementioned setting procedures are finished, the user creates an arbitrary user program (step S12). The user program created at this time may contain a code for referring to the internal variables set in step S10.

After the creation of the user program, the support apparatus 400 generates set data and the user program of execution form (step S14). The tag names to be contained in the connection setting are determined based on the correspondence of the IO assemblies to the internal variables set in step S10. That is, the support apparatus 400 determines the tag name associated with each datum based on the variable name set for each datum, and generates the connection setting that contains each tag name that is determined (corresponding to the generation function). The tag name set for each IO assembly may be the same as the internal variables (each variable name) set by the user, or a character string generated from each variable name by a predetermined rule may be used.

Finally, on receiving the user operation, the support apparatus 400 transmits a data form that contains the setting data and the user program of the execution form to the control apparatus 2 that functions as the originator, the remote device 300, and the control apparatus 2 that functions as the target (step S16). In this way, the support apparatus 400 transmits the connection setting received in step S2 to the control apparatus 2 and the remote device 300 involved in the connection setting (corresponding to the transmission function).

The setting procedures of the connection setting are finished by a series of processings as mentioned above.

### <F. User interface screen>

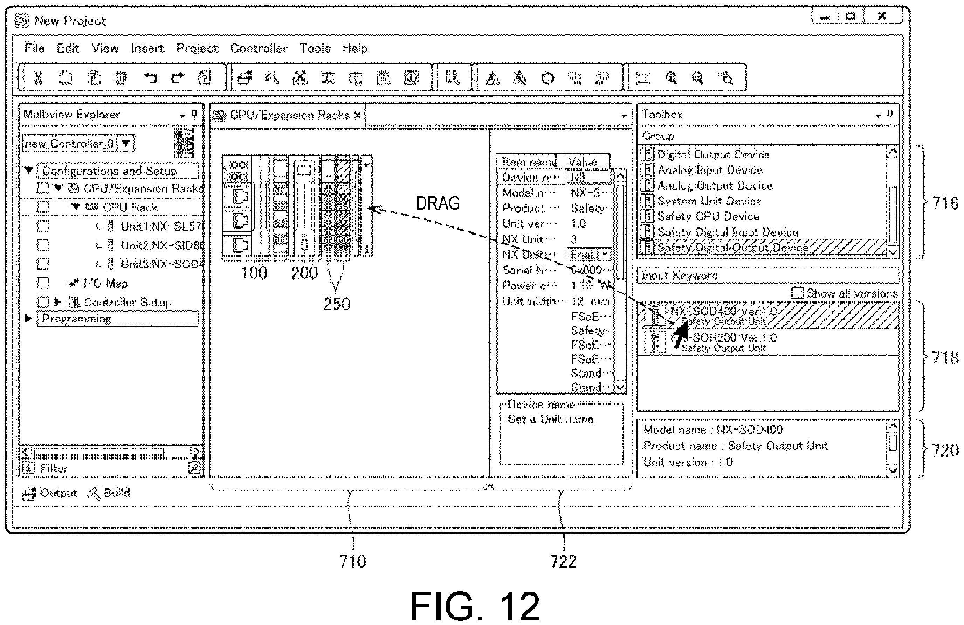

Next, an example of a user interface screen provided for the implementation of the procedures of the setting and the user program creation shown in FIG. 11 is described. The user interface screens shown in FIG. 12-FIG. 18 are typically presented to the user via the display part 410 of the support apparatus 400.

### (f1: designation of system configuration: step S2)

FIG. 12 is a schematic diagram shown an example of a user interface screen 700 related to the designation of the system configuration (step S2) shown in FIG. 11. Referring to FIG. 12, the user interface screen 700 includes a system configuration field 710 that visualizes the system configuration in the creation. The user defines the device (hardware) included in the target safety control system 1 by a keyboard, a mouse or the like.

More specifically, the user interface screen 700 includes a device classification list box 716 and a device list box 718 as toolboxes on the right side of the screen. The user first selects the classification of the device to be included in the system configuration in the device classification list box 716. Then, in the device list box 718, one or a plurality of devices that belongs to the classification selected in the device classification list box 716 is displayed by a list. The user selects the desired device from the list and drags the desired device to the system configuration field 710. Accordingly, the selected device is added.

Moreover, the user interface screen 700 includes a model information text box 720 that indicates model information and the like of the selected device, and an attribute text box 722 that indicates attributes of the selected device. The user adds the device while confirming the content displayed in the model information text box 720. Besides, the attributes of the added device can be changed in the attribute text box 722.

The user repeats the aforementioned procedures until all the devices included in the system configuration are added.

In the system configuration field 710 of the user interface screen 700 shown in FIG. 12, an example in which the standard control unit 100, the safety control unit 200 and two local IO units 250 are disposed is shown.

### (f2: setting of data size and classification of IO assembly: step S4)

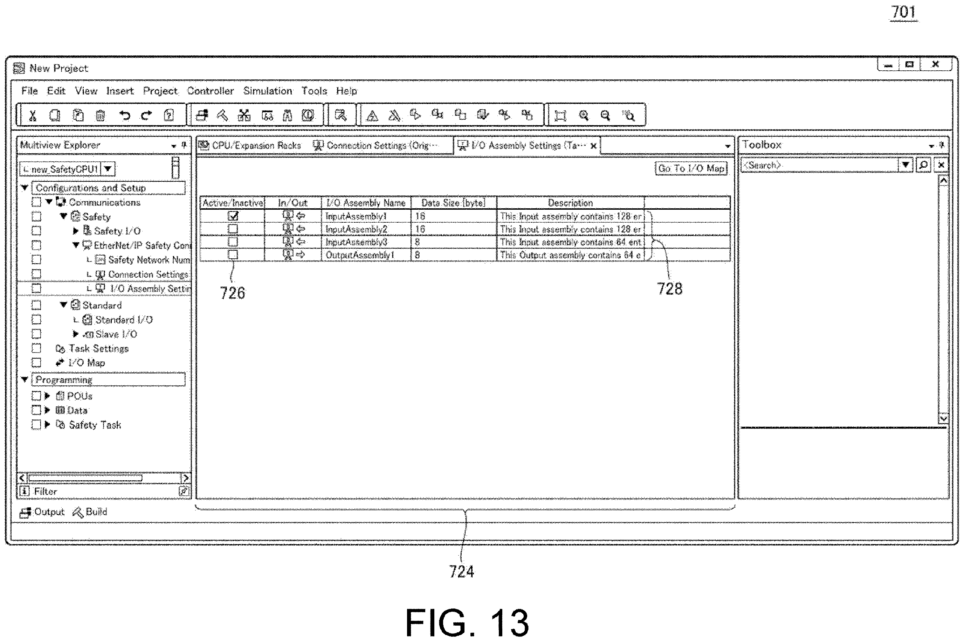

FIG. 13 is a schematic diagram showing an example of the user interface screen 701 related to the setting of the data size and the classification of the IO assemblies (step S4) shown in FIG. 11. Referring to FIG. 13, the user interface screen 701 includes an IO assembly visualization area 724 that visualizes the IO assemblies that are allocated. The user defines the device (hardware) included in the target safety control system 1 by the keyboard, the mouse or the like. More specifically, in the user interface screen 701, an IO assembly list 728 indicating a series of IO assemblies that can be set to the target control apparatus 2 (the safety control unit 200) is displayed, and the user validates the setting of the IO assemblies displayed in the IO assembly list 728 by checking a checkbox 726.

In the example of the user interface screen 701 shown in FIG. 13, the IO assembly list 728 includes two input assemblies consisting of 16 bytes, an input assembly consisting of 8 bytes, and an output assembly consisting of 8 bytes.

Moreover, the data size and the classification of the IO assemblies displayed in the checkbox 726 may be different corresponding to the model and the like of the control apparatus 2 that is set. Besides, among one or a plurality of the IO assemblies displayed in the checkbox 726 as default, the checkbox 726 corresponding to the predetermined IO assembly may be checked.

### (f3: setting of connection: step S6)

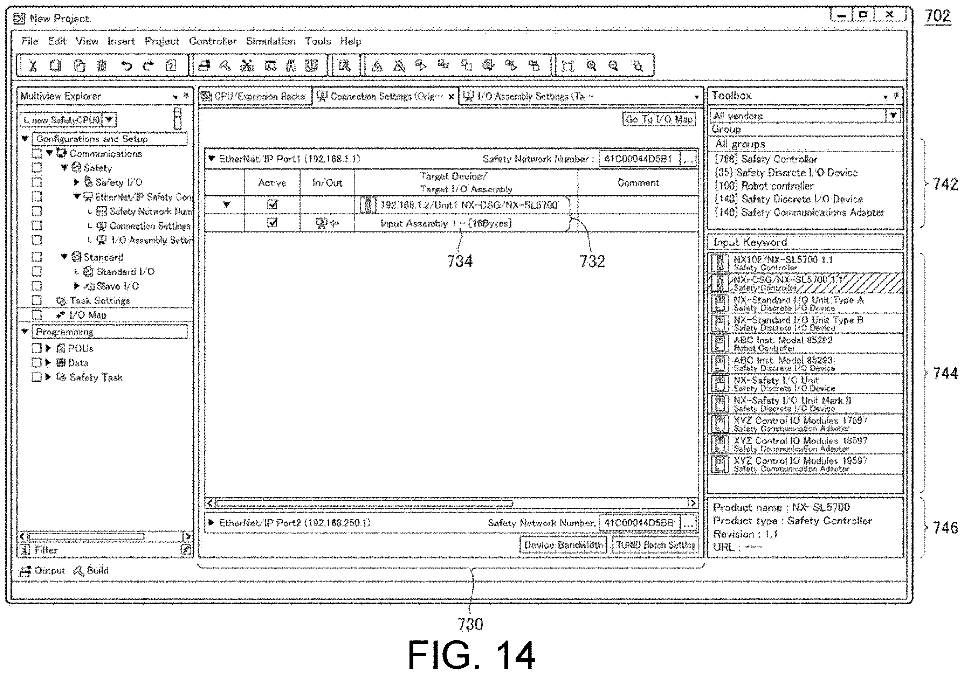

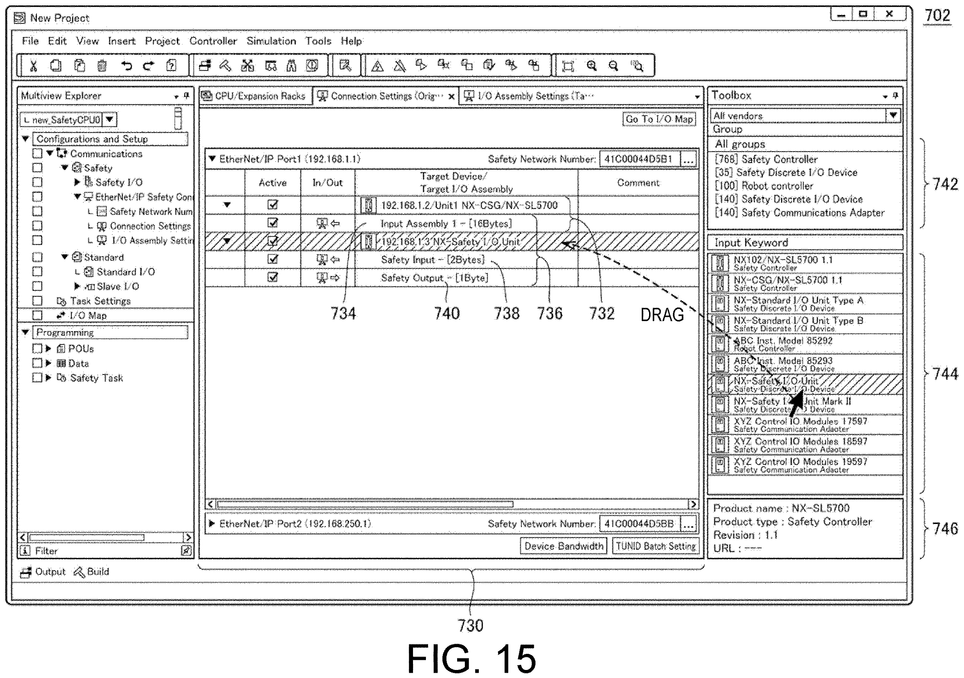

FIG. 14 and FIG. 15 are schematic diagrams shown an example of a user interface screen 702 related to the setting of the connection (step S6) shown in FIG. 11. Referring to FIG. 14, the user interface screen 702 includes a connection visualization area 730 that visualizes the connection that is set.

In the example shown in FIG. 14, in the connection visualization area 730, a connection setting 732 with a unit having "192.168.1.2" as an IP address is displayed. Moreover, the IP address of the originator is set to "192.168.1.1".

The connection setting 732 defines the connection with another control apparatus 2 (the safety control unit 200) and includes an input-output assembly setting 734. In the input-output assembly setting 734, it is defined that an input assembly consisting of 16 bytes is exchanged.

The user set the necessary connection by the keyboard, the mouse or the like. More specifically, the user interface screen 702 includes a target classification list box 742 and a target list box 744 as the toolboxes on the right side of the screen. The user first selects the classification of the unit to be set as the target of the connection to be set in the target classification list box 742. Then, in the target list box 744, one or a plurality of units that belongs to the classification selected in the target classification list box 742 is displayed by a list.

Then, the user selects the desired unit (target) from the list and drags the desired unit to the connection visualization area 730. The user interface screen 702 includes a model information text box 746 that indicates model information and the like of the selected unit. The user adds the device while confirming the content displayed in the model information text box 746.

Referring to FIG. 15, when the user drags any unit (target) to the connection visualization area 730, the connection to the selected unit is added. In this way, the user interface screen 702 displays the remote devices 300 capable of establishing connection from the control apparatus 2 in a list, and receives the selection to the remote devices 300 that are displayed in a list.

Here, by performing the addition operation of an arbitrary unit by the user, a connection setting 736 with the selected unit (in this example, the unit having "192.168.1.3" as the IP address) is automatically generated. In this way, the support apparatus 400 temporarily allocates the input-output data predetermined for the selected remote device 300 to the selected remote device 300.

Here, because the predetermined input-output data is temporarily allocated, alteration or addition to the connection setting 736 by the user is possible. That is, the user interface screen 702 receives an alteration operation from the user to the input-output data that is temporarily allocated. For example, by the operation to the checkbox corresponding to the setting of each input-output datum, validation/invalidation of the input-output data that is temporarily allocated can be switched.

The connection setting 736 defines the connection with the remote device 300 and includes the designation of the input-output data exchanged between the target control apparatus 2 and the remote device 300. In the example shown in FIG. 15, the connection setting 736 includes input-output assembly settings 738 and 740 as the designation of the input-output data.

In the input-output assembly setting 738, it is defined that an input assembly (safety input) consisting of 2 bytes is exchanged, and in the input-output assembly setting 740, it is defined that an output assembly (safety output) consisting of 1 byte is exchanged.

In this way, the designation of the input-output data included in the connection setting 736 includes the setting of the size (for example, 1 byte, 2 bytes or the like) of the data that is exchanged.

The designation of the input-output data included in the connection setting 736 also includes the setting of the classification (for example, input data, output data, safety input, safety output) of the data that is exchanged. That is, the classification of the data indicates whether the data that is exchanged is the input data transmitted from the target remote device 300 to the control apparatus 2 or the output data transmitted from the control apparatus 2 to the target remote device 300.

The number and the classification of the input-output assembly settings 738 and 740 are automatically determined corresponding to the classification and/or the model of the unit (target) added by the user.

In the example shown in FIG. 15, the input assembly (safety input) consisting of 2 bytes and the output assembly (safety output) consisting of 1 byte are automatically set corresponding to the classification and/or the model of the selected unit (target), but when another unit (target) is added, the IO assembly with a different data size and classification may be designated corresponding to the classification and/or the model of the unit that is added. The processing of automatically designating such an IO assembly is described later in detail.

The user repeats the aforementioned procedures until all the connections required by the system configuration are defined.

As shown in FIG. 14 and FIG. 15, in the support apparatus 400, the selected remote device 300 and the content (the input-output assembly settings 738 and 740) of the input-output data temporarily allocated to the selected remote device 300 are associated visualized.

### (f4: correspondence of IO assemblies to internal variables (originator): step S8)

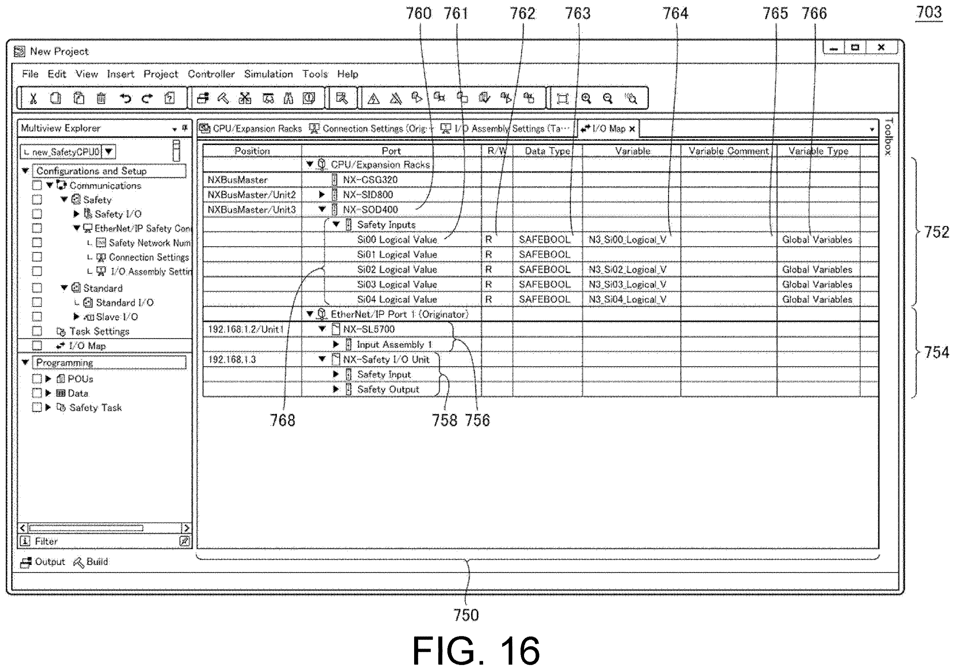

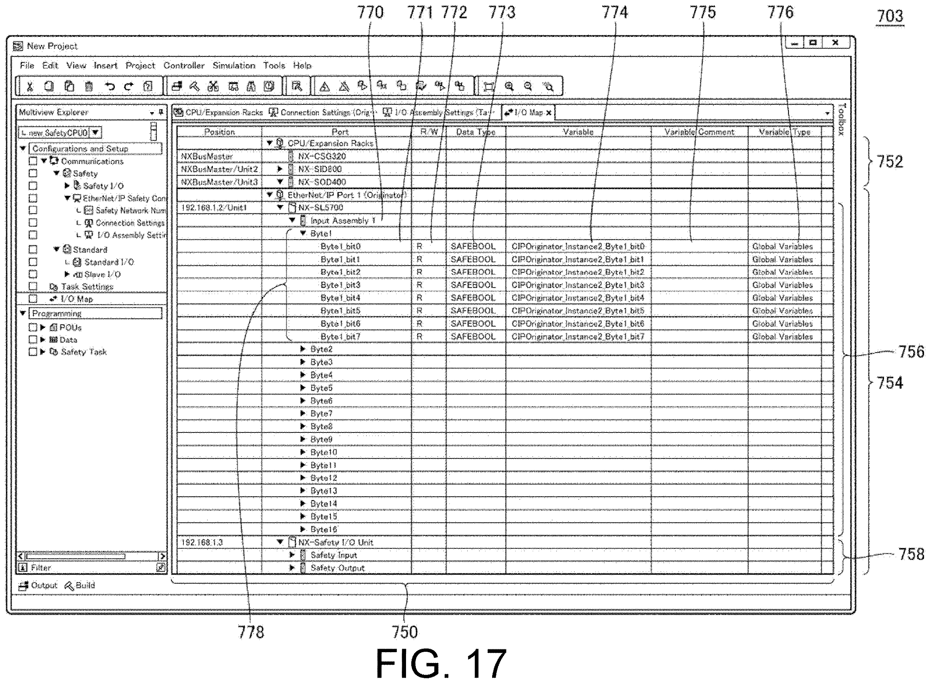

FIG. 16 and FIG. 17 are schematic diagrams showing an example of a user interface screen 703 related to the correspondence of the IO assemblies contained in the connection that is set to the internal variables (step S8) shown in FIG. 11. Referring to FIG. 16 and FIG. 17, the user interface screen 703 provides a function of IO mapping to perform the correspondence of the input-output data available in the control apparatus 2 (the standard control unit 100 and/or the safety control unit 200) to the internal variables.

The user interface screen 703 includes an IO map visualization area 750 that visualizes the correspondence of the input-output data and the IO assembly to the internal variables. The IO map visualization area 750 includes a local IO data column 752 and a remote IO data column 754.

In the local IO data column 752, the input-output data provided by the local IO unit 250 that is connected to the standard control unit 100 and/or the safety control unit 200 via the local bus 12 is hierarchically displayed by a list. In FIG. 16 and FIG. 17, the example (see FIG. 12) in which the standard control unit 100 that functions as the master controller of the local bus 12 is connected to two local IO units 250 is shown.

In the remote IO data column 754, the IO assemblies provided by the remote device 300 and/or another control apparatus 2 (the standard control unit 100 and/or the safety control unit 200) which is connected via the field network 4 and/or the superordinate network 6 are shown. That is, in the remote IO data column 754, the IO assemblies provided by the target which is accessible for the control apparatus 2 (the standard control unit 100 and/or the safety control unit 200) as the originator is shown.

In the examples shown in FIG. 16 and FIG. 17, the remote IO data column 754 includes a safety control unit item 756 which indicates the IO assemblies provided by another control apparatus 2 (the safety control unit 200), and a remote device item 758 which indicates the IO assemblies provided by the remote device 300.

In the user interface screen 703 shown in FIG. 16, an example is shown in which a unit item 760 indicating the safety IO unit that is one of the local IO units 250 is developed to a lower layer. That is, an IO map 768 is displayed in association with the unit item 760. In the IO map 768, a plurality of columns is defined in association with each input port included by the target safety IO unit. In each column, port information 761 indicating a target signal, R/W information 762 indicating whether the target signal is read-only or writable, data classification information 763 indicating the data classification of the target signal, variable information 764 indicating the variable name allocated to the target signal, a comment 765 including arbitrary information related to the target signal, and variable type information 766 indicating a variable type of a target variable can be defined.

The user can allocate an arbitrary internal variable available in the user program to each input-output datum via the user interface screen 703. As described later, by designating the internal variables defined in the user interface screen 703 in the user program that is created, during the execution, actual values (instance) of the input-output data that is designated can be used.

On the other hand, in the user interface screen 703 shown in FIG. 17, an example is shown in which the safety control unit item 756 indicting another safety control unit 200 is developed to lower layers. That is, an IO map 778 is displayed in association with the safety control unit item 756. In the IO map 778, a plurality of columns is defined in association with the IO assembly provided by the target safety control unit 200. In each column, port information 771 indicating each element of the target IO assembly, R/W information 772 indicating whether the target element is read-only or writable, data classification information 773 indicating the data classification of the target element, variable information 774 indicating the variable name allocated to the target element, a comment 775 including arbitrary information related to the target element, and variable type information 776 indicating the variable type related to the target element can be defined. In the data classification information 773, the data classification (boolean value for safety control, digit value for safety control, boolean value for standard control, digit value for standard control and so on) is set. In the variable type information 776, the data attribute of the variable (global variable, local variable and so on) is set.

The user can allocate an arbitrary internal variable available in the user program to each element of the IO assembly via the user interface screen 703. As described later, by designating the internal variables defined in the user interface screen 703 in the user program that is created, during the execution, actual values (instance) of the IO assembly that is designated can be used.

As described later, the internal variable (variable name) that is set for each element of the IO assembly is employed in the connection setting to generate the tag name that is set for each element of the IO assembly.

Moreover, even when the remote device item 758 indicating the IO assembly is developed to lower layers, a similar IO map is displayed, and in an aspect similar to the above aspect, arbitrary internal variables can be respectively allocated to each element of the IO assembly.

As described above, in the user interface screen 703 shown in FIG. 16, the support apparatus 400 receives the setting of the variable names used for reference in the program executed in the control apparatus 2 for the input-output data managed by the local IO unit 250 that is an example of the local device. Besides, in the user interface screen 703 shown in FIG. 17, the support apparatus 400 receives the setting of the variable names used for reference in the program executed in the control apparatus 2 for each datum (the IO assembly) exchanged in the connection that is set. In this way, the setting of the variable names to the input-output data managed by the local IO unit 250 and the setting of the variable names to each datum (the IO assembly) exchanged in the connection that is set can be performed in the same screen.

At this time, the setting items in each setting (the port information 771, the R/W information 772, the data classification information 773, the variable information 774, the comment 775, the variable type information 776 and so on) are in common.

Accordingly, in this embodiment, the allocation of variables to the input-output data provided by the local IO unit 250 and to the IO assembly provided by the remote device 300 and/or the control apparatus 2 (the standard control unit 100 and/or the safety control unit 200) can be substantially performed in the same aspect.

### (f5: correspondence of IO assembly to internal variables (target): step S10)

The setting of the correspondence of the IO assembly to the internal variables that is related to the control apparatus 2 that functions as the target and is in step S10 of FIG. 11 is conducted using the user interface screen similar to the user interface screen shown in the aforementioned FIG. 16 and FIG. 17. Therefore, detailed description is not repeated herein.

### (f6: creation of arbitrary program: step S12)

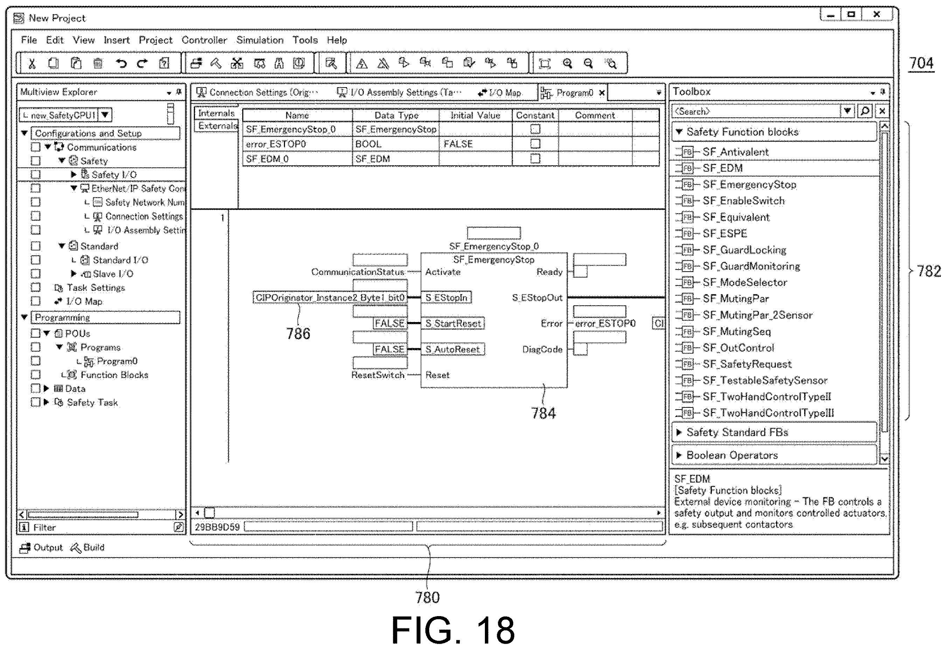

FIG. 18 is a schematic diagram showing an example of a user interface screen 704 related to the creation of an arbitrary user program (step S12) shown in FIG. 11. Referring to FIG. 18, the user interface screen 704 includes a program visualization area 780 that visualizes the user program being edited. The user creates the arbitrary user program by the keyboard, the mouse or the like.

More specifically, the user interface screen 704 includes a component list box 782 as the toolbox on the right side of the screen. The user selects in the component list box 782 the component to be used in the user program and drags the component to the program visualization area 780. Then, the selected component is arranged on the dragged position or associated with an existing component. The user repeats the operation of component arrangement until the desired user program is finished.

In the user interface screen 704 shown in FIG. 18, an example is shown in which an emergency stop function block 784 is arranged and the internal variable "CIP Originator-Instance2-Byte1-bit0" allocated to the element of the IO assembly in the user interface screen 703 shown in FIG. 17 is designate as the safety input signal of the emergency stop function block 784.

The user creates the arbitrary user program by the operation procedures as shown in FIG. 18.

### (f7: transmission of setting content and program: step S14)

When a required setting is performed and a required program is created by the procedures described above, a build processing (a type of compiling processing) is implemented and the program having the setting information or execution form that is generated is transmitted to the target unit. The setting and the processing of program transmission can employ an arbitrary user interface screen and detailed description is not performed herein.

### <G. Automatic determination of IO assembly>

As described with reference to the aforementioned FIG. 14 and FIG. 15, in the user interface screen 702, when the user drags the target unit to the connection visualization area 730, the target of connection object is added and the IO assembly allocated to the connection with the added target is automatically determined.

Such a processing of automatically determining the IO assembly is implemented by referring to a predetermined IO assembly setting table and the like in the support apparatus 400.

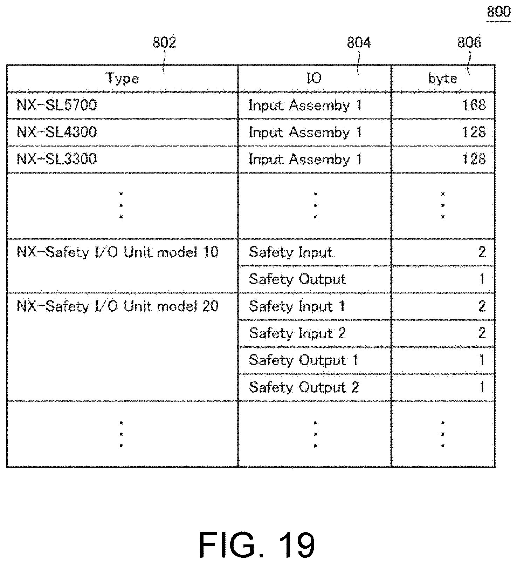

FIG. 19 is a schematic diagram showing an example of an IO assembly setting table 800 referred to by the support apparatus 400 of the safety control system 1 of this embodiment. Referring to FIG. 19, the IO assembly setting table 800 includes a type field 802 indicating the classification and/or model of the target, an IO field 804 indicating the classification of the IO assembly to be added, and a byte field 806 indicating the data size of each IO assembly.

When the target that becomes the object of connection is selected and added, the support apparatus 400 refers to the type field 802 of the IO assembly setting table 800 and extracts the classification and/or model corresponding to the classification of the added target. Then, the classification (the IO field 804) and the data size (the byte field 806) of the IO assembly corresponding to the extracted classification and/or model are extracted and determined as the IO assembly of the added target. Then, the support apparatus 400 displays the determined IO assembly in the connection visualization area 730.

In this way, the support apparatus 400 can automatically add the IO assembly corresponding to the target to which the connection is set by referring to the IO assembly setting table 800. Accordingly, registration and the like of the IO assembly required for the connection setting can be easily performed even by the user lacking knowledge.

### <H. Variation>

In the safety control system 1 shown in FIG. 2, the control apparatus 2 and the support apparatus 400 are mutually independent configurations, but all or part of the functions of the support apparatus 400 may be incorporated into the control apparatus 2. For example, by installing the support program 4062 that is installed in the support apparatus 400 in the control apparatus 2, the processing such as the aforementioned connection setting and so on can be implemented more easily.

In the description above, the control apparatus 2 in which the standard control unit 100 and the safety control unit 200 are combined is mainly illustrated. However, the present invention is not limited hereto and it is evident that the technical ideas of the invention of this application are also applicable to the control apparatus in which a plurality of standard control units 100 is combined and the control apparatus in which a plurality of safety control units 200 is combined. Furthermore, the present invention is not limited to the standard control unit and the safety control unit and may be the combination of arbitrary control units.

### <I. Appendix>

The embodiment as described above includes the following technical ideas.

### [Configuration 1]

A support apparatus (400) that is directed to a control apparatus (2) network-connected with one or a plurality of remote devices (300) and includes: a first setting reception part, which receives a setting of connection established between the control apparatus and any remote device (S6); a second setting reception part, which receives a setting of a variable name used for reference in a program executed in the control apparatus for each datum exchanged in the connection that is set (S10); a generation part, which determines a tag name associated with each datum based on the variable name that is set for each datum, and generates a connection setting that contains each tag name that is determined (S14); and a transmission part, which transmits the connection setting that is generated to the control apparatus and the device which are involved in the connection setting (S16).

### [Configuration 2]

The support apparatus according to configuration 1, further including a third setting reception part which receives a setting of variable names used for reference in the program executed in the control apparatus for input-output data managed by a local device (S8), wherein the reception of setting by the second setting reception part and the reception of setting by the third setting reception part can be performed in the same screen.

### [Configuration 3]

The support apparatus according to configuration 2, wherein items that are set are in common between the setting by the second setting reception part and the setting by the third setting reception part.

### [Configuration 4]

The support apparatus according to configuration 3, wherein the items that are set include a setting of data classification.

### [Configuration 5]

The support apparatus according to configuration 3 or 4, wherein the items that are set include a setting of data attribute of the variables.

### [Configuration 6]

A support program (4062) that is executed in a computer (400) capable of communicating with a control apparatus (2) network-connected to one or a plurality of remote devices (300), the support program making the computer execute: a step (S6) to receive a setting of connection established between the control apparatus and any remote device; a step (S10) to receive a setting of a variable name used for reference in a program executed in the control apparatus for each datum exchanged in the connection that is set; a step (S14) to determine a tag name associated with each datum based on the variable name that is set for each datum and to generate a connection setting that contains each tag name that is determined; and a step (S16) to transmit the connection setting that is generated to the control apparatus and the device which are involved in the connection setting.

### [Configuration 7]

A setting method for a control system (1) which includes a control apparatus (2) and one or a plurality of remote devices (300) network-connected to the control apparatus, including: a step (S6) to receive a setting of connection established between the control apparatus and any remote device; a step (S10) to receive a setting of a variable name used for reference in a program executed in the control apparatus for each datum exchanged in the connection that is set; a step (S14) to determine a tag name associated with each datum based on the variable name that is set for each datum and to generate a connection setting that contains each tag name that is determined; and a step (S16) to transmit the connection setting that is generated to the control apparatus and the device which are involved in the connection setting.

### <J. Advantage>

In the safety control system 1 of this embodiment, the connection setting between the control apparatus 2 and the remote device 300 can be facilitated.

**[Description of the Symbols]**

| | | | |
|---|---|---|---|
| 1 | safety control system | 4 | field network |
| 2, 2A, 2B | control apparatus | 6 | superordinate network |
| 12 | local bus | 710 | system configuration field |
| 14, 16, 18 | communication port | 716 | device classification list box |
| 30 | connection | 718 | device list box |
| 34, 700, 701, 702, 703, 704 | user interface screen | 720, 746 722 | model information text box attribute text box |
| 36 | list display | 724 | assembly visualization area |
| 38, 300 | remote device | 726 | checkbox |
| 40 | input-output data | 728 | IO assembly list |
| 42, 732, 736 | connection setting | 730 | connection visualization area |
| 100 | standard control unit | 734, 738, 740 | input-output assembly setting |
| 102, 202, 252, 302, 402 | processor | 742 | target classification list box |
| 104, 204, 404 | main memory | 744 | target list box |
| 106, 206, 406 | storage | 750 | IO map visualization area |
| 108 | superordinate network controller | 752 | local IO data column |
| 110, 112, 320 | field network controller | 754 | remote IO data column |
| 114, 416 | USB controller | 756 | safety control unit items |
| 116 | memory card interface | 758 | remote device items |
| 118 | memory card | 760 | unit items |
| 120, 220, 270 | local bus controller | 761, 771 | port information |
| 122 | master controller | 762, 772 | R/W information |
| 124 | IO data memory | 763, 773 | data classification information |
| 126, 225, 226 | transmission circuit | 764, 774 | variable information |
| 128, 227, 228 | reception circuit | 765, 775 | comment |
| 130, 230, 280, 330, 418 | processor bus | 766, 776 | variable type information |
| 200 | safety control unit | 768, 778 | IO map |
| 222, 272 | slave controller | 780 | program visualization area |
| 224, 254 | buffer memory | 782 | component list box |
| 240, 340 | assembly | 784 | emergency stop function block |
| 241, 341 | tag name | 800 | assembly setting table |
| 242 | control operation | 802 | type field |
| 244 | internal data group | 804 | field |
| 250 | local IO unit | 806 | byte field |
| 256, 306 | system memory | 1060, 2060 | system program |
| 258, 308 | IO module | 1062 | standard control program |
| 400 | support apparatus | 1064 | memory mapping information |
| 408 | input part | 2062 | connection management program |
| 410 | display part | 2064 | originator setting information |
| 412 | optical drive | 2066 | safety program |
| 414 | recording medium | 4060 | OS |
| 500 | HMI | 4062 | support program |
| 600 | server apparatus | | |

## Claims

1. A support apparatus (400) that is directed to a control apparatus (2) network-connected to one or a plurality of remote devices (300), **characterized by** comprising:
a first setting reception part (402, 4062), which receives a setting of connection established between the control apparatus (2) and any remote device (300) (S6);
a second setting reception part (402, 4062), which receives a setting of a variable name used for reference in a program (1062, 1064) executed in the control apparatus (2) for each datum exchanged in the connection that is set (S10);
a generation part (402, 4062), which determines a tag name associated with each datum based on the variable name that is set for each datum, and generates a connection setting that contains each tag name that is determined (S14); and
a transmission part (402, 4062), which transmits the connection setting that is generated to the control apparatus (2) and the device which are involved in the connection setting (S16).

2. The support apparatus (400) according to claim 1, further comprising a third setting reception part (402, 4062) which receives a setting of variable names used for reference in the program (1062, 1064) executed in the control apparatus (2) for input-output data managed by a local device (S8), wherein
the reception of setting by the second setting reception part (402, 4062) and the reception of setting by the third setting reception part (402, 4062) can be performed in the same screen (410).

3. The support apparatus (400) according to claim 2, wherein items that are set are in common between the setting by the second setting reception part (402, 4062) and the setting by the third setting reception part (402, 4062).

4. The support apparatus (400) according to claim 3, wherein the items that are set include a setting of data classification.

5. The support apparatus (400) according to claim 3 or 4, wherein the items that are set include a setting of data attribute of the variables.

6. A support program (4062) that is executed in a computer (400) capable of communicating with a control apparatus (2) network-connected to one or a plurality of remote devices (300), the support program (4062) **characterized by** making the computer (400) execute:
a step to receive a setting of connection established between the control apparatus (2) and any remote device (300) (S6);
a step to receive a setting of a variable name used for reference in a program (1062, 1064) executed in the control apparatus (2) for each datum exchanged in the connection that is set (S10);
a step to determine a tag name associated with each datum based on the variable name that is set for each datum and to generate a connection setting that contains each tag name that is determined (S14); and
a step to transmit the connection setting that is generated to the control apparatus (2) and the device which are involved in the connection setting (S16).

7. A setting method for a control system (1) which comprises a control apparatus (2) and one or a plurality of remote devices (300) network-connected with the control apparatus (2), and the setting method **characterized by** comprising:
a step to receive a setting of connection established between the control apparatus (2) and any remote device (300) (S6);
a step to receive a setting of a variable name used for reference in a program (1062, 1064) executed in the control apparatus (2) for each datum exchanged in the connection that is set (S10);
a step to determine a tag name associated with each datum based on the variable name that is set for each datum and to generate a connection setting that contains each tag name that is determined (S14); and
a step to transmit the connection setting that is generated to the control apparatus (2) and the device which are involved in the connection setting (S16).
